Europäisches Patentamt

European Patent Office

Office européen des brevets

(19)

(11) Numéro de publication : **0 041 012**
**B1**

(12) FASCICULE DE BREVET EUROPÉEN

(45) Date de publication du fascicule du brevet :
26.09.84

(21) Numéro de dépôt : 81400792.8

(22) Date de dépôt : 20.05.81

(51) Int. Cl.³ : **A 47 J 31/30**, A 47 J 31/057

(54) Appareil à infusion comprenant une pompe thermique.

(30) Priorité : 23.05.80 FR 8011577

(43) Date de publication de la demande :
02.12.81 Bulletin 81/48

(45) Mention de la délivrance du brevet :
26.09.84 Bulletin 84/39

(84) Etats contractants désignés :
**BE DE GB**

(56) Documents cités :
**DE-A- 1 579 549**
**DE-A- 2 064 455**
**DE-C-    53 058**
**DE-U- 1 935 672**
**DE-U- 1 989 557**
**FR-A- 1 547 862**
**US-A- 2 881 692**
**US-A- 4 083 295**

(73) Titulaire : **SEB S.A.**
**F-21260 Selongey (FR)**

(72) Inventeur : **David, Jacques**
**Rue Marie Estivalet**
**F-21120 Is Sur Tille (FR)**

(74) Mandataire : **Bouju, André et al**
**38, Avenue de la Grande Armée**
**F-75017 Paris (FR)**

EP 0 041 012 B1

**Description**

La présente invention concerne un appareil à infusion conforme au préambule de la revendication 1.

On connaît d'après le US-A-4 083 295 un appareil qui répond à cette définition et dans lequel la chaudière, est constituée par un tube en U vertical dont la contenance est suffisante pour préparer en un seul cycle une quantité de boisson prédéterminée. Les moyens pour permettre sélectivement la décompression de l'espace compris entre le clapet anti-retour et le bassin d'infusion sont constitués par un clapet monté au-dessus du bassin d'infusion et se fermant lorsqu'il est traversé par un certain débit de vapeur.

Après remplissage de la chaudière, l'eau pompée se déverse sur la mouture, le débit de vapeur étant insuffisant pour fermer le clapet. Quand il ne reste plus dans la chaudière assez d'eau pour fermer la communication entre les deux branches du U, l'eau restante ne peut plus être pompée, mais bout en produisant un fort débit de vapeur qui ferme le clapet. La vapeur désormais prisonnière monte en pression, et fait passer sous pression à travers la mouture l'eau qui s'était accumulée au-dessus de la mouture. Après épuisement de cette eau, la vapeur traverse à son tour la mouture en l'assèchant, la pression décroît jusqu'à ce que le clapet retombe sous l'effet de son propre poids. L'infusion est terminée.

Un tel appareil serait inapte à effectuer plusieurs cycles successifs. En effet, le fonctionnement sous pression ne peut commencer que quand les deux branches du U communiquent entre elles. Or cette communication met la face aval du clapet anti-retour en communication avec l'atmosphère par le clapet non encore fermé. S'il restait encore de l'eau dans le réservoir en amont du clapet anti-retour, ceci provoquerait la réalimentation immédiate de la chaudière et par conséquent le fonctionnement sous pression n'aurait pas lieu.

On connaît d'autre part d'après le FR-A-1 547 862 une machine à café se branchant sur le réseau d'alimentation en eau et comportant une pompe thermique capable d'effectuer sous pression en un seul cycle une quantité de boisson déterminée. Au départ, un clapet anti-retour permet l'alimentation de la chaudière, et de l'eau en excès quitte l'appareil par une valve d'échappement. Cette valve, sensible à la température, finit par se fermer sous l'effet de l'eau froide qui la traverse. Le chauffage dans la chaudière provoque l'expulsion de l'eau vers l'aval dans un cylindre où elle repousse un piston chargé par un ressort. Le piston est solidaire d'un tiroir qui, de ce fait, interrompt la communication du circuit avec la valve d'échappement et établit la communication du circuit avec le bassin de mouture qui est du type fermé. L'infusion s'effectue sous pression. Quand il n'y a plus d'eau dans la chaudière, un disjoncteur thermique interrompt le chauffage. La pression décroît, le piston est repoussé par le ressort, de sorte que le circuit est remis en communication avec la valve d'échappement. La vapeur chaude provoque l'ouverture de cette dernière, ce qui permet la réalimentation en eau de la chaudière pour préparer une nouvelle quantité prédéterminée de boisson.

Ce dispositif, essentiellement conçu pour doser l'eau utilisée au cours de chaque préparation, est trop complexe pour être applicable à un appareil électro-ménager. D'ailleurs, un tel appareil n'a pas à effectuer de dosage, puisque l'utilisateur met une quantité déterminée d'eau dans le réservoir. En outre, cet appareil à l'inconvénient de refouler de l'eau par la valve d'échappement. Un tel refoulement serait gênant dans un appareil portable. Si on rejetait l'eau dans le réservoir, son contenu finirait par chauffer et le fonctionnement de la valve d'échappement ne serait plus correct. Si on rejetait l'eau hors du réservoir, d'une part il faudrait un réceptacle supplémentaire à cet effet, et d'autre part il n'y aurait plus correspondance entre la quantité d'eau mise dans le réservoir et la quantité de boisson préparée.

Le but de l'invention est ainsi de rendre cyclique le fonctionnement de l'appareil défini au début.

Ce but est atteint lorsque l'appareil comporte les moyens énoncés dans la partie caractérisante de la revendication 1.

La cuve fonctionne en peu à la manière d'un vase d'expansion que l'eau occupe en plus ou moins grande quantité selon les conditions régnant dans le circuit. La cuve étant agencée de façon à tendre à se vider dans l'espace compris entre le clapet anti-retour et le bassin d'infusion, la présence d'eau dans la cuve est révélatrice de la présence d'eau dans le circuit, et par conséquent de l'utilité d'effectuer un pompage sous pression. C'est ce que permettent alors les moyens pour interdire la décompression sensibles au niveau d'eau dans la cuve.

Le pompage sous pression s'effectue tandis que la cuve se vide dans le circuit de par sa disposition. Grâce à la pression qui s'est établie, la décompression n'a pas lieu malgré le vidage de la cuve. Quand la pression diminue, ce qui révèle l'épuisement de l'eau dans le circuit, les moyens de décompression font suffisamment chuter la pression pour permettre la réalimentation. Le cycle peut dès lors recommencer.

L'invention permet ainsi de faire fonctionner cycliquement une pompe thermique, et ce sans dispositif coûteux à réaliser et sans échappement d'eau.

D'autres particularités et avantages de l'invention résulteront encore de la description ci-après.

Aux dessins annexés, donnés à titre d'exemples non limitatifs :

la figure 1 est une vue schématique montrant une pompe thermique du genre utilisé dans la cafetière conforme à l'invention ;

la figure 2 est une vue en élévation latérale et en coupe d'une réalisation industrielle de la cafetière ;

la figure 3 est une vue partielle en coupe selon la ligne III-III de la figure 2, montrant la chaudière de la cafetière ;

la figure 4 est une vue partielle en coupe montrant la cuve, de la cafetière quand le pointeau est en position de fermeture ;

la figure 5 est un graphique représentant l'évolution de la pression dans la cuve en fonction du temps au cours d'un cycle de pompage de la cafetière.

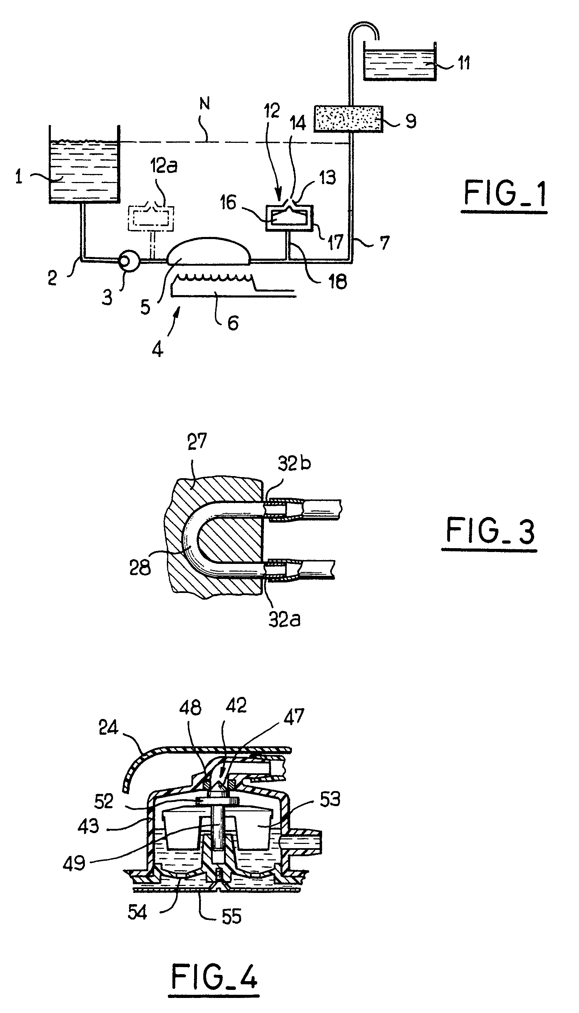

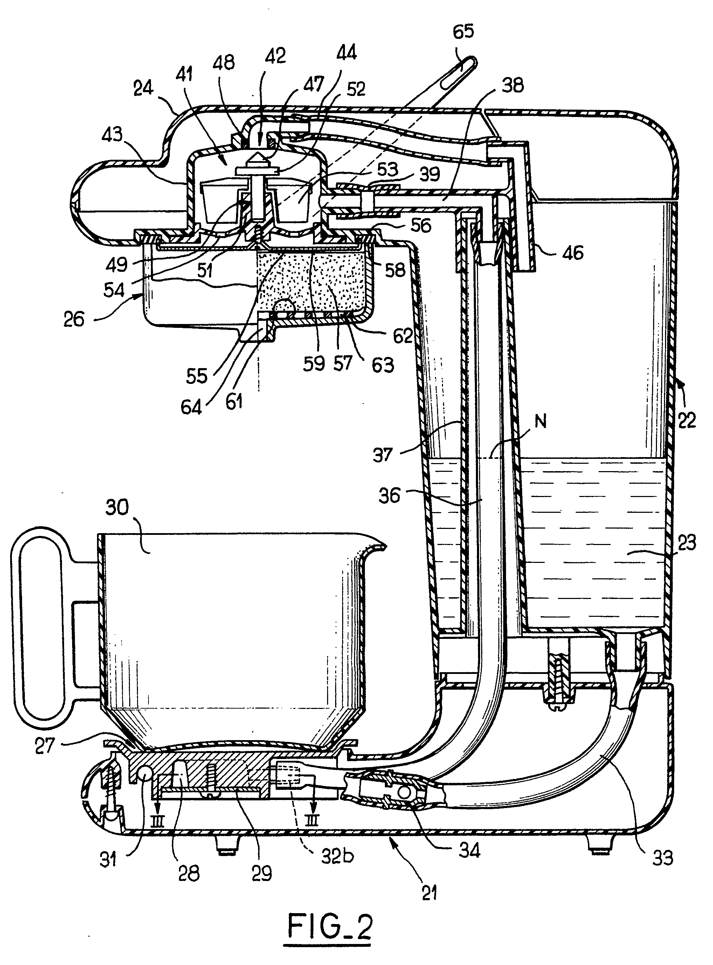

Afin que l'invention soit bien comprise, on va d'abord décrire la pompe thermique représentée schématiquement à la figure 1. Cette pompe comprend un réservoir d'alimentation 1 relié par l'intermédiaire d'un tube d'alimentation 2 et d'un clapet anti-retour 3, à une chaudière 4 constituée par une chambre 5 au-dessous de laquelle sont prévus des moyens de chauffage 6 tels que par exemple des résistances électriques ou un chauffage à feu vif. Le réservoir d'alimentation 1 est installé à une hauteur suffisante pour alimenter la chaudière 4 par gravité.

A l'opposé du tube d'alimentation 2, la chambre 5 est reliée à un conduit de refoulement 7. Celui-ci est relié à un dispositif 9 du genre filtre ou bassin d'infusion, qui peut être traversé avec perte de charge par un liquide, mais qui est sensiblement étanche à la vapeur. Au-delà du dispositif 9, le conduit 7 débouche au-dessus d'un réservoir de collecte 11 à une hauteur supérieure au niveau N de remplissage du réservoir d'alimentation 1.

Des moyens de décharge 12 sont montés entre le clapet anti-retour 3 et le dispositif 9, en communication avec la chambre 5 de la chaudière 4. Dans l'exemple représenté, les moyens de décharge 12 communiquent avec le conduit 7 entre la chambre 5 et le dispositif 9. Cependant, selon un autre mode de réalisation, les moyens de décharge peuvent être montés par exemple entre le clapet d'alimentation 3 et la chambre 5, comme représenté en pointillés en 12a à la figure 1.

Les moyens de décharge 12 comprennent un orifice 13 faisant communiquer la chambre 5 de la chaudière 4 et le conduit de refoulement 7 avec l'atmosphère. L'orifice 13 peut être obturé par un pointeau 14 fixé à la face supérieure d'un flotteur 16 monté dans une cuve 17 dans la paroi supérieure de laquelle est ménagé l'orifice 13. La cuve 17, qui est installée plus haut que la chaudière 4, communique avec le conduit de refoulement 7 par l'intermédiaire d'un raccord tubulaire 18.

La pompe thermique qui vient d'être décrite fonctionne de la façon suivante :

Au départ, l'eau provenant du réservoir 1 remplit le conduit 2, la chambre 5, le conduit 7 jusqu'au niveau N, ainsi que la cuve 17 de sorte que sous l'effet de la poussée d'Archimède s'exerçant sur le flotteur 16, le pointeau 14 obture l'orifice 13. Après un certain temps de chauffage, l'eau contenue dans la chambre 5 entre en ébullition et la pression de vapeur chasse l'eau contenue dans la chambre 5 vers le conduit de refoulement 7 et le réservoir 11. Au bout d'un certain temps, la quasi-totalité de l'eau a été chassée dans le réservoir 11, et la chambre 5 ainsi que la cuve 17 ne contiennent plus que de la vapeur. Cependant, le pointeau 14 reste collé contre l'orifice 13, sous l'effet de la pression de vapeur, de sorte que celle-ci peut donc encore chasser l'eau pouvant subsister dans la canalisation 7. Après disparition totale de l'eau entre le clapet d'aspiration 3 et le dispositif 9, la pression commence à diminuer dans la chambre 5 et la cuve 17, du fait de condensations à l'extérieur de la chaudière 4. Ainsi, le poids du pointeau 14 et du flotteur 16 finissent par vaincre la force ascendante que la vapeur exerce sur eux, et le flotteur 16 tombe au fond de la cuve 17, mettant ainsi la chambre 5 à la pression atmosphérique. Dès lors, les conditions sont réunies pour que le clapet 3 permette la réalimentation en eau de la chambre 5 à partir du réservoir 1. Cette eau envahit la cuve 17, provoque la remontée du flotteur 16 et la fermeture de l'orifice 13 par le pointeau 14, et le cycle peut recommencer.

La cafetière représentée aux figures 2 à 4 met en œuvre ce type de pompe. Elle comprend un socle 21 portant une colonne 22 qui renferme un réservoir d'alimentation 23. Au sommet de la colonne 22 est aménagée une partie en porte-à-faux 24 à laquelle est suspendu un bassin de mouture 26, destiné à infuser et à filtrer la boisson de café. Une semelle 27 montée à la partie supérieure libre du socle 21, au dessous du bassin de mouture 26, peut recevoir un récipient de collecte 30 pour la boisson de café (ou autre infusion). La semelle 27, réalisée en aluminium coulé massif, renferme une chambre 28 réalisée à partir d'une gorge en fer à cheval fermée vers le bas par une plaquette 29 vissée. La chambre 28, constitue avec une résistance blindée 31 sertie autour d'elle dans la semelle 27, la chaudière de la pompe thermique de la cafetière. Les deux extrémités du fer à cheval se terminent par des embouts tubulaires de raccordement 32a et 32b. L'embout tubulaire 32a est relié à la base du réservoir d'alimentation 23 par l'intermédiaire d'un tuyau souple 33 dans lequel est monté un clapet anti-retour 34 permettant le passage par gravité de l'eau contenue dans le réservoir 23 vers la chambre 28 mais interdisant tout retour en sens inverse. L'autre embout (32b) permet de relier la chambre 28 avec un tuyau souple 36 faisant partie du circuit de refoulement de la pompe thermique et destiné à conduire l'eau chaude vers le bassin de mouture 26. Le tuyau 36 est engagé dans une cheminée 37 qui traverse verticalement le réservoir 23 et évite que l'eau contenue dans ce réservoir ne refroidisse exagérément l'eau chaude refoulée par la pompe.

A son extrémité supérieure, le tuyau 36 communique avec le bassin de mouture 26 par l'intermédiaire d'un tube coudé 38 dirigé horizontalement vers l'extrémité de la partie en porte-à-faux 24, d'un raccord 39, et de moyens de décharge 41. Ceux-ci comprennent un orifice de décharge 42 ménagé dans la paroi supérieure d'une cuve 43 installée au-dessus du bassin de mouture 26 et coaxialement à ce dernier dans la partie en porte-à-faux 24. L'orifice de décharge 42, ménagé sensiblement dans l'axe de la cuve 43, fait communiquer cette dernière avec le réservoir 23 par l'intermédiaire d'un autre tuyau souple 44 et d'un embout 46 aboutissant au-dessus du niveau de remplissage maximum prévu pour le réservoir 23.

La cuve 43 renferme un pointeau 47 dirigé vers le haut et destiné à coopérer avec un siège 48 qui entoure l'orifice 42. Le pointeau 47 comporte à l'opposé de sa partie active, un corps cylindrique 49 engagé à coulisse dans un bossage 51 ménagé à la base de la cuve 43. Le corps 49 est séparé de la partie active du pointeau par une collerette 52 destinée notamment à donner au pointeau 47 une masse déterminée en fonction de la surface de l'orifice 42 et du seuil de pression au-dessous duquel il doit mettre en communication la cuve 43 avec le réservoir 23. Un flotteur annulaire 53 est monté à coulisse sur le corps 49 du pointeau 47, entre le bossage 51 et la collerette 52.

Le tube coudé 38 débouche dans la cuve 43 à une certaine hauteur au-dessus du fond de celle-ci, mais en dessous du niveau que doit atteindre l'eau dans la cuve pour que le flotteur applique le pointeau 47 contre le siège 48. La cuve 43 communique avec le bassin de mouture 26 par l'intermédiaire d'orifices 54 ménagés autour du bossage 51 dans la paroi inférieure de la cuve 43, et d'une grille 55 vissée à la base du bossage 51 et appuyée par son pourtour sur un joint annulaire 56 sur lequel prend également appui le bord supérieur 58 du bassin de mouture 26.

Le bassin de mouture 26, qui est destiné à recevoir le gâteau de mouture 57 entre deux feuilles de papier filtre 59, 61, présente sur son fond des rainures concentriques 62 et radiales 63 aboutissant à un orifice tubulaire central 64 permettant l'écoulement de la boisson de café dans le récipient de collecte 28. Le bassin de mouture 26 est monté en appui contre le joint 56 à l'aide d'un dispositif de serrage connu comprenant un levier 65.

La cafetière qui vient d'être décrite fonctionne de la façon suivante :

Du café moulu est inséré dans le bassin de mouture 26 entre les feuilles de papier filtre 59, 61, pour constituer le gateau de mouture 57. Le réservoir 23 est approvisionné en eau, de sorte que l'eau occupe le tuyau 33, la chambre 28 et le tuyau 36 jusqu'au niveau N de remplissage du réservoir 23. La résistance 31 chauffe l'eau contenue dans la chambre 28 jusqu'à ébullition et la pression de vapeur plaque la bille 34 contre son siège de sorte que l'eau monte dans le tuyau souple 36, passe par la cuve 43 et vient imbiber le gâteau de mouture 57. La cuve 43 reste vide, le flotteur 53 est en appui contre le bossage 51 et le pointeau 47 est dégagé de l'orifice 42. Ainsi, dès que toute l'eau contenue dans la chambre 28 a été pompée vers le bassin de mouture 26 et que de la vapeur commence à arriver dans la cuve 43, cette vapeur s'échappe par l'orifice 42 et va se condenser dans le réservoir 23, de sorte que la pression tombe suffisamment dans la chambre 28 pour que le clapet 34 permette la réalimentation en eau de celle-ci. Le cycle qui vient d'être décrit recommence alors autant de fois qu'il est nécessaire pour imbiber et faire gonfler le gâteau de mouture 57.

Quand ce résultat est atteint, c'est-à-dire généralement après deux ou trois cycles, l'eau ne peut plus pénétrer dans le gâteau de mouture sans qu'on lui impartisse une certaine pression. Ainsi, l'eau pompée commence à emplir la cuve 43 et le flotteur 53 s'élève dans la cuve 43 jusqu'à ce que le pointeau 47 obture l'orifice 42. L'eau contenue dans la cuve 43 est alors sensiblement mise à la pression de la chaudière 28, ce qui lui permet de pénétrer et de traverser le gâteau de mouture 57 pour ressortir par l'orifice 64 et tomber sous forme infusée de boisson de café dans le récipient de collecte 30. Au fur et à mesure que le niveau décroît dans la cuve 43, le flotteur 53 descend en coulissant le long du corps 49 du pointeau 47. Cependant, le pointeau 47, malgré son poids calibré, reste plaqué contre le siège 48 de l'orifice 42 sous l'effet de la pression régnant dans la cuve 43. Dès que l'eau initialement contenue dans la chambre 28 est le tuyau 36 a quitté la cuve 43, l'ensemble comprenant le tuyau 36, le tube 38 et la cuve 43 ne contient plus que la vapeur dont la pression décroît lentement par condensation en particulier sur le gâteau de mouture 57, jusqu'à ce que le poids du pointeau 47 surmonte la pression régnant dans la cuve 43 et permette à celui-ci de tomber contre le flotteur 53 en dégageant l'orifice 42. La chambre 28 de la chaudière se trouve alors mise à l'atmosphère, de sorte que le clapet 34 permet la réalimentation de la chaudière et que le cycle peut recommencer.

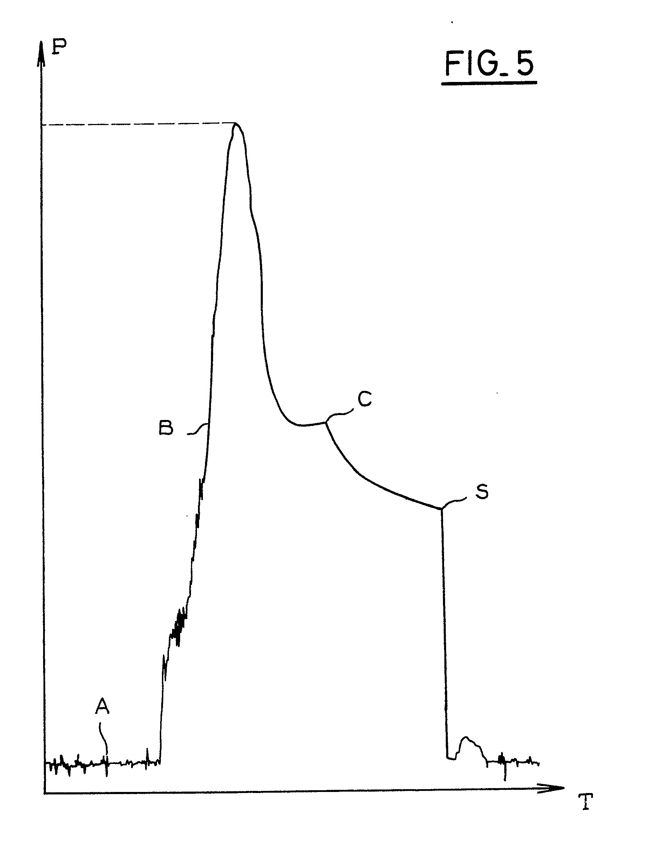

Ce fonctionnement est visualisé à la fig. 5 qui représente la pression (P) dans la chambre 28 en fonction du temps (T) au cours d'un cycle effectué après le gonflement du gâteau de mouture 57. On reconnaît en A la phase de remplissage à faible pression de la chambre 28 à partir du réservoir 23 puis en B la phase de pompage du liquide vers la cuve 43 et de la cuve 43 vers le gâteau de mouture 57. A partir du point C, toute l'eau a pénétré dans le gâteau de mouture 57, et il ne reste plus que de la vapeur dans la pompe. La pression de cette vapeur décroît lentement jusqu'à ce qu'elle passe en dessous du seuil S pour lequel le pointeau 47 tombe de lui-même de l'orifice 42 et rétablit la pression atmosphérique dans la pompe.

Ce type d'alimentation de cafetière présente l'avantage que l'eau traversant la mouture est à une température inférieure à 100 °C alors que la pression exercée pour l'extraction, du fait du tassement du gâteau de mouture, est nettement supérieure à celle obtenue par infusion à l'aide d'un filtre à l'air libre. Cette pression permet une extraction très complète des arômes mais du fait de la température modérée, ce sont surtout les arômes non amers qui sont extraits. Ainsi, la cafetière conforme à l'invention permet de confectionner un café de très bonne qualité à partir d'une quantité de mouture réduite. En outre, du fait de la pression relativement modérée, la boisson confectionnée est limpide et comporte très peu de particules solides en suspension.

La disposition décrite, dans laquelle la cuve est montée au-dessus du bassin de mouture permet d'éviter que la vapeur vienne au contact du gâteau de mouture, ce qui serait néfaste à la qualité de la boisson. En effet, il subsiste en permanence une mince couche d'eau au-dessus de la grille 55 qui évite cet inconvénient.

Bien entendu, l'invention n'est pas limitée à l'exemple décrit, mais de nombreux aménagements peuvent être apportés à cet exemple sans sortir du cadre de l'invention.

C'est ainsi que le pointeau 47, au lieu d'être taré de son propre poids, pourrait être associé à un ressort monté entre ce pointeau et la paroi supérieure de la cuve. Par ailleurs en dirigeant la tige du pointeau vers l'extérieur, il serait possible de réaliser un tarage réglable par ressort à tension variable ou par lest variable.

La séparation mécanique du pointeau 47 et du flotteur 53 répond à des impératifs de fabrication. Il est cependant possible de fixer le pointeau 47 sur le flotteur 53, et c'est alors le poids de l'ensemble qui constitue la tare du pointeau. La cuve 43 pourrait être disposée près de la chaudière 28, soit sur le tube d'alimentation, soit sur le tube de refoulement, soit directement reliée à la chambre 28. Dans ce dernier cas un clapet anti-retour doit interdire le retour de l'eau contenue dans la partie verticale du tuyau 36.

Dans l'exemple décrit, les moyens de décharge provoquent une mise à l'air libre de la chaudière. On peut envisager d'autres moyens de décharge, sans sortir pour cela du cadre de l'invention. En effet, par un détecteur de variations de pression commandant une électrovanne disposée en dérivation sur la chaudière, ou en tout point de ces canalisations d'alimentation ou de refoulement, on obtient le même fonctionnement. Dans le même ordre d'idée, au lieu de créer une mise à l'air sur la chaudière, on peut concevoir un refroidissement de celle-ci soit par un arrêt de chauffage si l'on dispose d'une chaudière à faible inertie thermique soit par l'introduction d'eau froide directement dans la chaudière, cette eau étant maintenue dans une réserve hors chauffage mise à la même pression que celle régnant dans la chaudière.

## Revendications

1. Appareil à infusion sous pression d'eau comprenant un réservoir d'alimentation (1, 23) relié à une chaudière (4, 28) par l'intermédiaire d'un clapet anti-retour (3, 34) et un tube de refoulement (7, 36, 38) débouchant à un niveau supérieur à celui du réservoir (N), le clapet anti-retour, la chaudière et le tube de refoulement constituant une pompe thermique à fonctionnement cyclique, tandis que le tube de refoulement (7, 36, 38) communique avec un bassin d'infusion (9, 26) de type fermé et que l'appareil comprend en outre des moyens (12, 42, 47) pour permettre sélectivement la décompression de l'espace compris entre le clapet anti-retour et le bassin d'infusion lorsque après une phase d'infusion la pression dans cet espace tombe en dessous d'un certain seuil, caractérisé en ce qu'il comprend un moyen sensible à la pression et agissant sur les moyens de décompression lorsque ce seuil de pression est supérieur à la pression d'alimentation en amont du clapet anti-retour (3, 34), ainsi qu'une cuve (17, 43) communiquant avec l'espace précité et disposée de façon à tendre à se vider dans ce dernier, et des moyens (16, 47, 53) pour interdire la décompression lorsqu'un certain niveau d'eau minimal est présent dans la cuve (43).

2. Appareil à infusion conforme à la revendication 1, caractérisé en ce que les moyens de décompression comprennent un système à pointeau (47) monté sur un orifice de décompression (14, 42), et en ce que, au titre du moyen sensible à la pression, le pointeau est taré de manière à régler le seuil de pression en dessous duquel sa tare (52) l'écarte de l'orifice (42).

3. Appareil à infusion conforme à la revendication 2, caractérisé en ce que l'orifice (42) est dirigé vers le haut et en ce que le pointeau (47) présentre à titre de tare une masse (52) déterminée en fonction de la section de l'orifice (42) et du seuil de pression (S) souhaité.

4. Appareil à infusion conforme à l'une quelconque des revendications 2 ou 3, caractérisé en ce que la tare est réglable.

5. Appareil à infusion conforme à l'une des revendications 2 à 4 caractérisé en ce que l'orifice de décompression (42) est ménagé dans la paroi supérieure de la cuve (43) et en ce que les moyens pour interdire la décompression comprennent un flotteur (53) monté dans la cuve (43) et associé au pointeau (47) pour appliquer ce dernier contre l'orifice de décompression (42) à partir d'un certain niveau de liquide dans la cuve (43).

6. Appareil à infusion conforme à la revendication 5, caractérisé en ce que le flotteur (53) est fixé au pointeau (47).

7. Appareil à infusion conforme à la revendication 6, caractérisé en ce que le flotteur (53) est monté à coulisse relativement au pointeau (47), des moyens de butée (52) étant prévus pour limiter la course du pointeau (47) vers le bas relativement au flotteur (53).

8. Appareil à infusion conforme à la revendication 7, caractérisé en ce que le pointeau (47) est monté à coulisse relativement à la cuve (43).

9. Appareil à infusion conforme à l'une des revendications 5 à 8, caractérisé en ce que le tube de refoulement (38) débouche dans la paroi latérale de la cuve (43), cette dernière étant reliée au bassin d'infusion (26) par au moins une ouverture (54) ménagée dans sa paroi inférieure.

10. Appareil à infusion conforme à la revendication 9, caractérisé en ce que le tube de refoulement (38) débouche dans la cuve (43) en dessous du niveau minimal de liquide à partir duquel le flotteur (53) applique le pointeau (47) contre l'orifice de décompression (42).

11. Appareil à infusion conforme à l'une quelconque des revendications 1 à 10, caractérisé en ce que la cuve (43) est aménagée au-dessus du bassin d'infusion (26).

## Claims

1. Apparatus for infusion under water pressure comprising a supply reservoir (1, 23) connected to a boiler (4, 28) through a non-return valve (3, 34) and a delivery tube (7, 36, 38) having its opening at a higher level than that of the reservoir (N), the non-return valve, the boiler and the delivery tube being such as to constitute a cyclic-operation heat pump whilst the delivery tube (7, 36, 38) communicates with an infusion basin (9, 26) of the closed type and the apparatus further comprises means (12, 42, 47) for selectively permitting decompression of the space provided between the non-return valve and the infusion basin when the pressure within this space falls below a certain threshold value after an infusion stage, characterized in that it comprises a pressure-responsive means for producing action on the decompression means when this pressure threshold value is higher than the supply pressure upstream of the non-return valve (3, 34) as well as a tank (17, 43) which communicates with the space aforesaid and is so arranged as to have a tendency to empty into this latter, and means (16, 47, 53) for preventing decompression when a certain minimum level of water is present within the tank (43).

2. Infusion apparatus in accordance with claim 1, characterized in that the decompression means comprise a needle-valve system (47) mounted on a decompression orifice (14, 42) and that, for the purpose of provoding the pressure-responsive means, the needle-valve is tared so as to adjust the pressure threshold value below which said needle-valve is moved by its tare (52) away from the orifice (42).

3. Infusion apparatus in accordance with claim 2, characterized in that the orifice (42) is directed upward and that the needle-valve (47) has a tare consisting of a weight (52) determined as a function of the cross-sectional area of the orifice (42) and of the desired pressure threshold value (S).

4. Infusion apparatus in accordance with either of claims 2 or 3, characterized in that the tare is adjustable.

5. Infusion apparatus in accordance with any one of claims 2 to 4, characterized in that the decompression orifice (42) is formed in the top wall of the tank (43) and that the means for preventing decompression comprise a float (53) mounted within the tank (43) and associated with the needle-valve (47) in order to apply this latter against the decompression orifice (42) above a certain level of liquid within the tank (43).

6. Infusion apparatus in accordance with claim 5, characterized in that the float (53) is attached to the needle-valve (47).

7. Infusion apparatus in accordance with claim 6, characterized in that the float (53) is slidably mounted with respect to the needle-valve (47), abutment means (52) being provided for limiting the downward travel of the needle-valve (47) with respect to the float (53).

8. Infusion apparatus in accordance with claim 7, characterized in that the needle-valve (47) is slidably mounted with respect to the tank (43).

9. Infusion apparatus in accordance with any one of claims 5 to 8, characterized in that the delivery tube (38) has its opening in the lateral wall of the tank (43), this latter being connected to the infusion basin (26) by means of at least one opening (54) formed in its bottom wall.

10. Infusion apparatus in accordance with claim 9, characterized in that the delivery tube (38) opens into the tank (43) below the minimum level of liquid above which the float (53) applies the needle-valve (47) against the decompression orifice (42).

11. Infusion apparatus in accordance with any one of claims 1 to 10, characterized in that the tank (43) is disposed above the infusion basin (26).

## Ansprüche

1. Unter Wasserdruck arbeitende Aufgußmaschine, die einen mit einem Siedegefäß (4, 28) über ein Rückschlagventil (3, 34) verbundenen Speisebehälter (1, 23) und ein Ausstoßrohr (7, 36, 38) umfaßt, das auf einer größeren Höhe als die des Behälters (N) mündet, wobei das Rückschlagventil, das Siedegefäß und das Ausstoßrohr eine thermische Pumpe mit zyklischer Funktion bilden, während das Ausstoßrohr (7, 36, 38) mit einem Aufgußbecken (9, 26) vom geschlossenen Typ in Verbindung ist und die Maschine ferner Mittel (12, 42, 47) umfaßt, die das selektive Entspannen des Raumes zwischen dem Rückschlagventil und dem Aufgußbecken ermöglichen, wenn nach einer Aufgußphase der Druck in diesem Raum unter einen bestimmten Schwellwert absinkt, dadurch gekennzeichnet, daß sie eine druckempfindliche Einrichtung umfaßt, die auf die Entspannungsmittel einwirkt, wenn dieser Druckschwellwert größer ist als der Versorgungsdruck stromaufwärts von dem Rückschlagventil (3, 34), sowie eine Wanne (17, 43) umfaßt, die mit dem vorgenannten Raum in Verbindung ist und derart angeordnet ist, daß sie bestrebt ist, sich in diesen zu entleeren, und Mittel (16, 47, 53) umfaßt, welche die Entspannung unterbinden, wenn ein bestimmter minimaler Wasserpegel in der Wanne (43) vorhanden ist.

2. Aufgußmaschine nach Anspruch 1, dadurch gekennzeichnet, daß die Entspannungsmittel ein Düsennadelsystem (47) umfassen, das an einer Entspannungsöffnung (14, 42) angebracht ist, und daß als druckempfindliche Einrichtung die Düsennadel derart beschwert ist, daß der Druckschwellwert eingestellt wird, unterhalb welchem ihr Gewicht (52) sie von der Öffnung (42) entfernt.

3. Aufgußmaschine nach Anspruch 2, dadurch gekennzeichnet, daß die Öffnung (42) nach oben gerichtet ist und daß die Düsennadel (47) als Beschwerungsgewicht eine Masse (52) aufweist, die in Abhängigkeit vom Querschnitt der Öffnung (42) und von dem gewünschten Druckschwellwert (S) bestimmt ist.

4. Aufgußmaschine nach Anspruch 2 oder 3, dadurch gekennzeichnet, daß das Beschwerungsgewicht einstellbar ist.

5. Aufgußmaschine nach einem der Ansprüche 2 bis 4, dadurch gekennzeichnet, daß die Entspannungsöffnung (42) in der oberen Wandung der Wanne (43) angebracht ist und daß die Mittel zum Unterbinden der Entspannung einen Schwimmer (53) umfassen, der in der Wanne (43) montiert und der Düsennadel (47) so zugeordnet ist, daß er diese ab einem bestimmten Flüssigkeitspegel in der Wanne (43) gegen die Entspannungsöffnung (42) andrückt,

6. Aufgußmaschine nach Anspruch 5, dadurch gekennzeichnet, daß der Schwimmer (53) an der Düsennadel (47) befestigt ist.

7. Aufgußmaschine nach Anspruch 6, dadurch gekennzeichnet, daß der Schwimmer (53) relativ zu der Düsennadel (47) verschiebbar gelagert ist und Anschlagmittel (52) vorgesehen sind, um den Hub der Düsennadel (47) relativ zu dem Schwimmer (53) nach unten zu begrenzen.

8. Aufgußmaschine nach Anspruch 7, dadurch gekennzeichnet, daß die Düsennadel (47) relativ zu der Wanne (43) verschiebbar gelagert ist.

9. Aufgußmaschine nach einem der Ansprüche 5 bis 8, dadurch gekennzeichnet, daß das Ausstoßrohr (38) in der Seitenwandung der Wanne (43) mündet, wobei letztere mit dem Aufgußbecken (26) über wenigstens eine Öffnung (54) verbunden ist, die in ihrer unteren Wand angebracht ist.

10. Aufgußmaschine nach Anspruch 9, dadurch gekennzeichnet, daß das Ausstoßrohr (38) in der Wanne (43) unterhalb des minimalen Flüssigkeitspegels mündet, ab welchem der Schwimmer (53) die Düsennadel (47) gegen die Entspannungsöffnung (42) andrückt.

11. Aufgußmaschine nach einem der Ansprüche 1 bis 10, dadurch gekennzeichnet, daß die Wanne (43) oberhalb des Aufgußbeckens (26) angeordnet ist.

FIG_1

FIG_3

FIG_4

FIG_2

FIG. 5